(19)

Europäisches
Patentamt
European
Patent Office
Office européen
des brevets

(11)     **EP 3 498 356 A1**

(12)     **EUROPEAN PATENT APPLICATION**

(43) Date of publication:
   **19.06.2019   Bulletin 2019/25**

(51) Int Cl.:
   ***B01D 3/12*** *(2006.01)*          ***B01D 17/02*** *(2006.01)*

(21) Application number: **18211221.9**

(22) Date of filing: **10.12.2018**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority:   **12.12.2017   US 201715839120**

(71) Applicant: **Chachisvilis, Mirianas
   San Diego, CA 92130 (US)**

(72) Inventor: **Chachisvilis, Mirianas
   San Diego, CA 92130 (US)**

(74) Representative: **Lecomte & Partners
   P.O. Box 1623
   1016 Luxembourg (LU)**

(54)     **CHIRAL SEPARATION AND ANALYSIS BY MOLECULAR PROPELLER EFFECT**

(57)     A method and a device for separation and analysis of chiral molecules are described. The method relies on using a fluid shear to induce molecular rotation and the molecular propeller effect to transform rotational motion into translation motion of opposite direction for counterpart enantiomers. The direction of motion of each enantiomers is used to determine its absolute configuration by comparing the direction value with theoretically calculated one. The device uses multiple moving surfaces or pressure induced flows to induce shear flow condition in the solution to separate enantiomers.

EP 3 498 356 A1

**Description**

**FIELD OF THE INVENTION**

The field of the invention generally relates to the use of shear flows to perform separation and analysis of chiral molecules, and more particularly, to a method and device for the separation and analysis of enantiomeric compounds using fluid shear flow and the molecular propeller effect.

**BACKGROUND OF THE INVENTION**

A chiral object is any object or system that differs from its mirror image in such a way that its mirror image cannot be superimposed on the original object. One type of chiral object is a chiral molecule, also called an enantiomer. A common feature of chiral molecules is their "handedness" (i.e., right-handed or left-handed). Enantiomers are a subset of chiral objects called stereoisomers, which are a set of isomeric molecules whose atoms have similar connectivity but differ in the way the atoms are arranged in space. Chirality is important in chemistry, especially for biological and drug applications. Separation and analysis of chiral molecules plays an important role in the pharmaceutical industry.

A mixture of molecules is called racemic when it contains equal amounts of right-handed and left-handed enantiomers. The mixture is called enantiopure when only one type of enantiomer dominates. In the following text, a racemic mixture is defined more broadly to include any non-pure mixture of stereoisomers that are not enantiopure whatever the ratio of counterpart enantiomers.

Each enantiomer has a unique connectivity and arrangement of atoms in the space, which is called an absolute configuration of the molecule. For example, for a chiral molecule with one chiral center there are two possible arrangement of atoms around the chiral center, typically referred to as S and R absolute configurations.

Many conventional molecular separation techniques are not effective for chiral molecules, because two counterpart enantiomers (i.e. S or R) generally share identical physical properties, including size, charge, chemical composition, electric or magnetic dipole moments and interact identically with other achiral substances.

Enantiomers can be identified by their interaction with a circularly polarized light or with other chiral substances. Accordingly, the currently used chiral separation methods utilize interactions with chiral selectors as in e.g. chiral chromatography or rely on recrystallization from solutions. Absolute configuration is typically determined using x-ray crystallography or chiroptical spectroscpy (including vibrational circular dichroism (VCD)). However these methods are time consuming, require large amount of sample and development of specific separation protocol for each newly synthesized chiral molecule. Other more recently proposed chiral separation/analysis methods include chiral gratings and NMR in the presence of static electric field. Very recently, molecular handedness has been detected using microwaves and Coulomb explosion imaging, however these new methods are applicable to molecules that can be sampled in the gas phase and have not been demonstrated for large molecules with high degrees of conformational freedom.

Another relevant chiral separation and analysis method includes a method and device described by Kibar et al. (U.S. Patents Nos. 7,935,906 and 8,698,031), wherein chiral molecules are exposed to rotating electric fields to utilize the molecular propeller effect that leads to separation of counterpart enantiomers. This method and device require use of very strong rotating electric fields and a few days to achieve partial enantiomer separation for typical chiral molecules. In this method the interaction of the electric field with the dipole moment is used to induce a torque on the chiral molecule and cause it to rotate; the further improvement of this method is limited, among other factors, by available materials that can withstand even stronger electric fields required to accelerate the separation process. Moreover the method requires the chiral molecule to have a large dipole moment and preferential use of non-polar solvents (to increase the electric field magnitude within the chamber) which limits utility of the method.

**SUMMARY OF THE INVENTION**

The disclosure described herein generally relates to a method and device for separation of enantiomers. An exemplary form of a device comprises an approximately cylindrical inner member and an outer member, which can be rotated with respect of each other.

In brief, the inner and outer members are configured to form a contiguous channel or channels (i.e., gap or gaps) between them, which is filled with a solution of enantiomers. The relative rotation of the inner and outer members induces a fluid shear in the contiguous channel between them.

In an embodiment, the overall shape of the inner member is that of an inverted cylinder, e.g., a cup, which can be attached to an axel that can be rotated manually or by a suitable motor. The outer member is also of a cylindrical shape and contains an extruded cylindrical or cup-shaped inner part that is of a smaller diameter than the inner member. The channel between the outer wall of the outer member and the inner member, and the channel between the extruded wall of the outer member and the inner member are approximately the same. The inner member is positioned within the outer member by leaving a small gap at the bottom to enable molecules in solution to diffuse freely between the inner and outer channel areas. The inner member can be moved up or down to form a contact with the bottom of the outer member and seal the solution in the two cylindrical channels. The outer member can also be attached to an axel and rotated in the opposite direction to the rotation of the inner member.

Contained within the device, depending on the overall configuration, are necessary power sources, electronic circuitry and sensors configured to maintain specified rotation frequency, temperature and monitor separation efficiency. In certain instances, one or more functions, *e.g.,* data analysis circuitry, power, data display light sources and sensors, and other components and devices, may be located in a separate portion of the device connected to the device portion by means of electrical wires and/or fiber optics.

In an alternate embodiment of the device, the overall shape of the device is that of a rectangular or trapezoidal fluidic channel, in which the channel height is significantly smaller than the channel width in order to maintain a higher shear rate. The channel height can be lower on one side than the other to enable faster flow of the fluid on one side versus another side of the channel. A non-pure solution of enantiomers can be injected near the center bottom of the channel. The effect of shear flow conditions causes the chiral molecules to rotate leading to propulsion of counterpart enantiomers into opposite directions along the direction perpendicular to the flow and to the shear plane. If channel heights are chosen to be different on the left and right sides of the channel, then enantiomers are not only separated in the direction perpendicular to the flow but also separated along the direction of the flow because flow velocity is different on the left and right sides of the channel. To prevent molecules diffusing away from the bottom of the channel where the shear rate is highest, two different, immiscible fluids can be used wherein, the solvent injected near bottom contains dissolved chiral molecules while the solvent injected above the bottom has low solubility with respected to the chiral molecules of interest thereby preventing the diffusion of the chiral molecules away from the bottom of the channel.

Data and analysis from the device may be displayed on a small screen located on the outside of the member in an embodiment. In other embodiments, such data may be transmitted either wirelessly or via electrical connection to adjacent data receiving devices for display and further analysis.

Thus, in one aspect the disclosure provides a method to separate enantiomers using fluid shear and molecular propeller effect, the method including (a) injecting non-pure enantiomer solution into the channel(s) between the inner and the outer members; (b) rotating the inner and outer member with respect to each other to create fluid shear; (c) waiting for an amount of time until the counterpart enantiomers become enriched in the inner and outer channels or, in the case, when only one channel is used in the upper and the lower sides of the channel; and (d) collecting the separated enantiomers. In some embodiments, two or more injection and collection ports may be included in the inner and outer members to facilitate the injection of the non-pure solution and collections of enriched or separated enantiomer solutions.

In other embodiments, the method can further include (a) performing theoretical simulation to determine direction of motion of an enantiomer in the specific absolute configuration; (b) using the described device on the solution of a pure or enriched enantiomer with unknown absolute configuration to determine its direction of motion; and (c) using the comparison between the theoretical and experimental directions to determine the absolute configuration of the enantiomer.

## BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

Figure 1A illustrates a side view of an embodiment of a setup of shear fluid flow between two moving surfaces and the rotation of the chiral molecules under the effect of shear fluid flow;

Figure 1B illustrates an embodiment of an orientation of the principle axis of an exemplary chiral molecule;

Figures 2A-B illustrate a side view of an embodiment of a chiral separation device;

Figure 3 illustrates a front view of an embodiment of an alternate chiral separation device that uses pressure-driven flow in a channel; and

Figure 4 illustrates an embodiment of a chiral separation of counterpart enantiomers due to molecular propeller effect in shear fluid flow.

## DETAILED DESCRIPTION OF THE INVENTION

Provided herein, in various aspects, are methods and devices for the separation of chiral molecules, i.e. counterpart enantiomeric compounds, and the determination of their absolute configuration.

The methods and devices described herein overcome the shortcoming of the existing chiral separation and analysis methods by eliminating the need for a chiral selectors, strong electric fields and dipole moments, recrystallization challenges, solvent restrictions and enabling a priori prediction of separation performance and determination of absolute configuration on minute amounts of the enantiomer within short time.

Pasteur showed that dissymmetry generated by a rotation coupled with linear motion is similar to chirality in chemical structures. Similarly the macroscopic propeller effect is a known hydrodynamic phenomenon which manifests itself through rotational-translational coupling in left-right dissymmetrical bodies. Thus enantiomers can be envisaged as tiny propellers with their "handedness" and propulsion direction being determined by absolute configuration of the molecule. It has been proposed by Baranova *et al.*, that the radio frequency electric field with rotating polarization could be used to separate enantiomers. However, using electric field to rotate molecules is not an optimal approach due to reasons listed above.

It has been proposed that a particle placed in the fluid shear flow will experience a torque causing it to rotate. For example the rotation frequency, v, of a spherical particle placed in the shear flow can be calculated as follows:

$$\nu = \frac{1}{4\pi}\dot{\gamma} \ (\text{eq. 1})$$

where $\dot{\gamma}$ is a shear rate. Notably, the rotation frequency does not depend on the diameter of the particle.

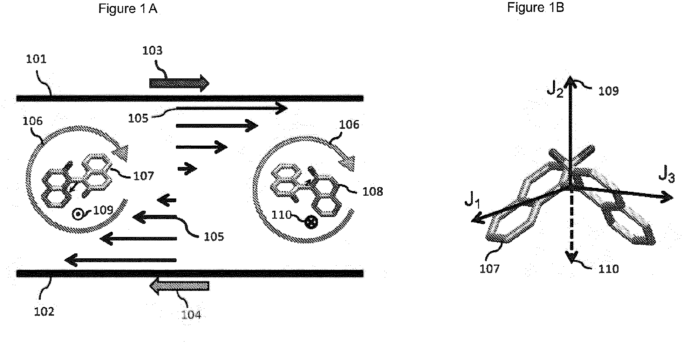

Figure 1A illustrates a side view of an embodiment of a setup (100) of shear fluid flow between two moving surfaces and the rotation of chiral molecules under the effect of shear fluid flow. As shown in Figure 1A, a solution of a mixture of counterpart enantiomers, for example, (S) and (R) 2,2'-dimethyl-1,1'-binaphthalene (107) and (108), present in between channel walls (101) and (102), is subjected to shear flow (105) of the solution, i.e., the fluid, resulting in shear flow direction (103 and 104). The S and R enantiomers of the exemplary enantiomers are shown on the left side (107) and right side (108), respectively, of Figure 1A. Due to the shear flow (105), each of the enantiomers rotate (106), in which the rotation induces movement in a direction (109) and (110) for each enantiomer. Due to the inherent chirality of the molecules, rotational motion will be coupled to translational motion through the molecular propeller effect. That is, counterpart enantiomers (107) and (108) when placed in the shear flow (105) rotate and move in a direction out of the page (109) or into the page (110).

As shown in Figure 1B, for the orientations shown the enantiomer (107) will rotate around a principal axis $J_2$ (corresponding to direction (109)) of the $J_1$, $J_2$, and $J_3$ coordinates. The rotational motion of the enantiomer couples into translational motion leading to a propulsion of the enantiomer along the direction perpendicular to the plane of the shear flow (which is parallel to the drawing page). The S and R enantiomers will propel into opposite directions (S will propel out of the page plane towards the reader and R will propel away in opposite direction). Note that the propulsion direction depends on axis of rotation. The rotation around principal axis $J_1$ will lead to an opposite propulsion direction as compared to rotation around axis $J_2$. As rotational-translational coupling efficiencies are not equal around the $J_1$ and $J_2$ axis, the molecule will propel in the direction having largest rotational to translational coupling efficiency.

The propulsion velocity due to propeller effect in shear flows can be calculated according to the following formula:

$$\text{v} = C_{ave} L_r \nu \ (\text{eq. 2})$$

where $\nu$ is the molecular rotation frequency given by eq. 1, $L_r$ is the rotational-translation coupling constant (i.e. the amount of translation displacement per one revolution of the molecule) and $C_{ave}$ is the orientational factor, which accounts for the random orientation of the most efficient molecular "propeller axis" with respect to the shear plane, its expected value is $\sim 0.5$. Equation 2 indicates that molecular propulsion due to molecular propeller effect is linearly proportional to the shear rate magnitude.

The Peclet number, *Pe*, is given by a ratio of shear rate to the rotational friction coefficient of the chiral molecule. For typical chiral molecules and practically achievable shear rates ($\sim 1\text{x}10^6\text{s}^{-1}$) the Pe << 1. For such low *Pe* numbers previous theoretical reports predicted that migration velocity of macroscopic helical particles should be proportional to the cube of the shear rate thus making chiral separation of enantiomers (with size around 1nm) not possible under practically achievable shear rates. Previous reports of molecular dynamics in shear flows did not consider molecular propeller effect which, as we show above, has linear dependence on the shear rate, suggesting that chiral separation of small molecules can be achieved under realistic conditions. Moreover our approach, based on using the concept of molecular propeller effect, offers a straightforward approach to calculate the magnitude and direction of the propulsion velocity in the shear flow which enables application of the method to absolute configuration determination.

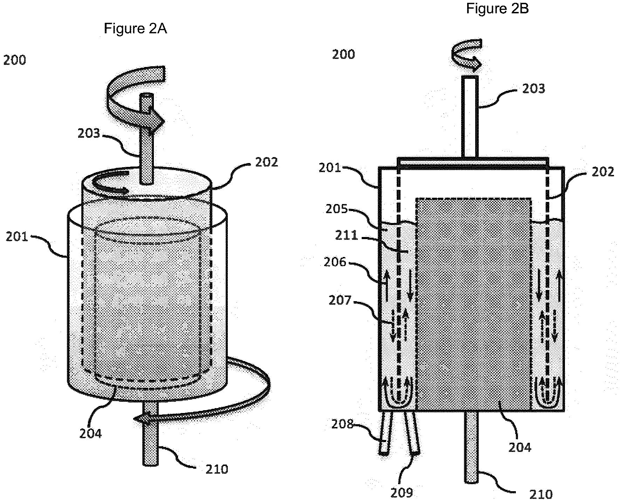

As shown in Figures 2A and 2B, in an embodiment a device (200) includes an outer member (201) and an inner member (202). The overall shape of the inner member (202) is that of an inverted cylinder, e.g., a cup, which can be attached to an axel (203) that can be rotated manually or by a suitable motor. The outer member (201) is also of a cylindrical shape and contains an extruded cup-shaped inner part (204) that is of a smaller diameter than the inner member (202). The outer channel (205) located between the internal wall of the outer member (201) and the outer wall of the inner member (202), and the inner channel (211) located between the outer wall of the extruded cup-shaped inner part (204) and the internal wall of the inner member (202) are approximately the same size. The inner member (202) is positioned within the outer member (201) by leaving a small gap at the bottom to enable molecules in solution to diffuse freely between the outer channel (205) and the inner channel (211). The inner member (202) can be moved up or down to form a contact with the bottom of the outer member (201) and seal the solution in the outer channel (205) and the inner channel (211). Alternatively, the outer member (201) can be moved up or down to form a contact with the bottom of the inner member (202) and seal the solution in the outer channel (205) and the inner channel (211).

The outer member (201) can also be attached to an axel (210) and rotated in the opposite direction to the rotation of the inner member (202). Both inner and outer members can be rotated in opposite directions to create opposite shear flows in the outer channel (205) and inner channel (211). Alternatively, only the inner member (202) can be rotated while outer member (201) is kept stationary. Both the inner member (201) and the outer members (202) may contain ports, e.g., (208) and (209), respectively, for injection and collection of a solution containing chiral molecules.

For example, if the channels between the inner and outer members are filled with a racemic solution of enantiomers, the shear flow created by the relative rotation of the inner and outer members will cause the molecules to rotate and then propel up or down along the channels with their direction being dependent on the absolute configuration of the enantiomers. That is, a specific enantiomer (e.g. S), located in the outer channel (205) may propel downward as indicated by the dashed arrows (207) towards the bottom of the device, then diffuse over into the inner channel (211) where the inverse direction of shear flow will drive it upwards. Similar processes will happen for the counterpart enantiomer (e.g. R) i.e. the enantiomer with different absolute configuration, initially located in the inner channel (211) except it will be propelled downwards in the inner channel (211), then diffuse into outer channel (205) at the bottom of the device and be propelled upwards (as indicated by solid arrows 206) along outer channel (205). After sufficient time, the outer channel (205) will contain only the R enantiomers while the inner channel (211) will contain only the S enantiomers. At this time, the inner member (202) can be lowered to seal outer channel (205) and inner channel (211) from each other, and the solutions can be collected with the separated enantiomers.

In other alternate embodiments, the inner member (202) may contain more cylindrical surfaces and the outer member (201) could contain more extruded cylindrical surfaces arranged in such a way that the surfaces of the inner and outer members are interdigitated to form a series of gaps (i.e. more than two) thereby increasing a distance over which the chiral separation can proceed, i.e., an increased separation distance or the amount of effective theoretical plates, which would be advantageous for some chiral molecules requiring more time for separation.

Thus, in an embodiment the disclosure provides a device for separating counterpart enantiomers from a mixture of a solution of enantiomers, the device including a) a rotatable inner member containing one or more surfaces; b) an outer member containing one or more surfaces; and c) a contiguous channel between the inner member and the outer member for containing the solution of enantiomers, wherein the inner member can be lowered to separate and seal the mixture of the solution of enantiomers in the contiguous channel into an inner chamber and an outer chamber for collecting the separated enantiomers.

In one aspect, the disclosure provides a device for separating counterpart enantiomers from a mixture of a solution of enantiomers, wherein the outer member is rotatable during operation.

In another aspect, the disclosure provides a device for separating counterpart enantiomers from a mixture of a solution of enantiomers, wherein the inner member or the outer member is stationary during operation.

In another aspect, the disclosure provides a device for separating counterpart enantiomers from a mixture of a solution of enantiomers, wherein the inner member and the outer member are cooled to maintain a stable temperature during operation.

In another aspect, the disclosure provides a device for separating counterpart enantiomers from a mixture of a solution of enantiomers, wherein the inner member and the outer member includes one or more ports for loading and removing the solution containing the mixture of enantiomers from the inner chamber and the outer chamber.

In another aspect, the disclosure provides a device for separating counterpart enantiomers from a mixture of a solution of enantiomers, wherein a relative enrichment of enantiomers in the inner chamber or the outer chamber is used to determine an absolute configuration of the enantiomers.

In another aspect, the disclosure provides a device for separating counterpart enantiomers from a mixture of a solution of enantiomers, wherein a solution of a pure enantiomer is placed in the device and a relative enrichment of the enantiomer in the inner chamber or the outer chamber is used to determine an absolute configuration of the enantiomer.

In another aspect, the disclosure provides a device for separating counterpart enantiomers from a mixture of a solution of enantiomers, wherein the inner member and the outer member each contain two or more rotating surfaces exposed to the solution of enantiomers.

In another aspect, the disclosure provides a device for separating counterpart enantiomers from a mixture of a solution of enantiomers, wherein a rotation frequency of the enantiomers is between about 1-5000 rpm, or between about 5000-10000 rpm, or between about 10000 - 20000 rpm, or between about 20000-50000 rpm, or between about 50000-10000 rpm, or more than 100000 rpm.

In another aspect, the disclosure provides a device for separating counterpart enantiomers from a mixture of a solution of enantiomers, wherein the outer member has an inner diameter in the range of less than about 0.1 cm, or from about 0.1 cm to about 1 cm, or from about 1 cm to about 5 cm, or from about 5 cm to about 10 cm, or from about 10 cm to about 20 cm, or more than 20 cm.

In another aspect, the disclosure provides a device for separating counterpart enantiomers from a mixture of a solution of enantiomers, wherein the contiguous channel between the one or more surfaces of the inner member and the one or more surfaces of the outer member are each independently in the range of about less than 0.1 $\mu$m, or from about 0.1 $\mu$m to about 1 $\mu$m, or from about 1 $\mu$m to about 10 $\mu$m, or from about 10 $\mu$m to about 1mm, or from about 1 mm to about 10 mm, or more than 10 mm.

In another aspect, the disclosure provides a device for separating counterpart enantiomers from a mixture of a solution of enantiomers, wherein shear rate is between: less than 10 $s^{-1}$, 10 $s^{-1}$ - 100 $s^{-1}$, 100 $s^{-1}$ - 1000 $s^{-1}$, 1000 $s^{-1}$ - 10000 $s^{-1}$, 10000 $s^{-1}$ -100000 $s^{-1}$, 100000 $s^{-1}$ - 1000000 $s^{-1}$, $10^6$ $s^{-1}$ - $10^7$ $s^{-1}$, more than $10^7$ $s^{-1}$.

In another embodiment, the disclosure provides a method for separating and analyzing counterpart enantiomers from a mixture of a solution of enantiomers, the method including a) inducing fluid shear flow conditions in the solution of enantiomers; b) rotating each of the enantiomers independently due to the shear flow, wherein each counterpart enantiomer rotates in the same direction; c) propelling each of the enantiomers independently due to a molecular propeller effect along a direction perpendicular to a plane of shear flow, wherein each counterpart enantiomer moves in opposite directions; and d) waiting for an amount of time until a specified degree of enantiomer separation is achieved.

In one aspect, the disclosure provides a method for separating and analyzing counterpart enantiomers from a mixture of a solution of enantiomers, wherein the shear flow is induced by relative motion of multiple surfaces in contact with the solution of enantiomers.

In another aspect, the disclosure provides a method for separating and analyzing counterpart enantiomers from a mixture of a solution of enantiomers, wherein the shear flow is induced by pressure-induced flow of the solution of enantiomers through a channel containing multiple surfaces.

In another aspect, the disclosure provides a method for separating and analyzing counterpart enantiomers from a mixture of a solution of enantiomers, wherein the direction of motion of the enantiomer is dependent on the absolute configuration of the enantiomer.

In another aspect, the disclosure provides a method for separating and analyzing counterpart enantiomers from a mixture of a solution of enantiomers, wherein an experimentally determined direction of a pure enantiomer is used to determine its absolute configuration.

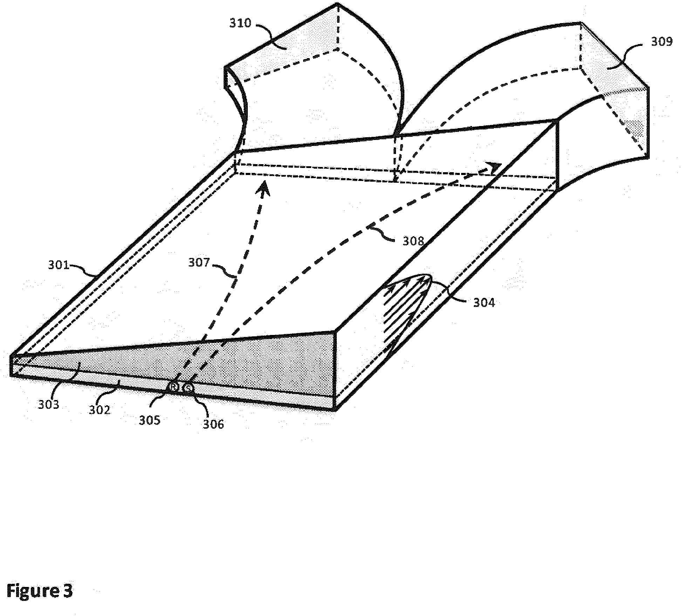

Figure 3 shows an alternate embodiment of a device, wherein the overall shape of the device (300) is that of a rectangular or trapezoidal fluidic channel (301) with the channel height being significantly smaller than the channel width to maintain a higher shear rate. The channel height can be chosen to be lower on one side (left side in the Figure 3) than on the other side (right side in the Figure 3) to enable faster flow of the fluid on one side versus another side of the channel. Solvents are pumped along channel using pressure differential leading to creation of the parabolic flow profile (304) across the channel (301). Appropriately shaped injections ports are used to maintain laminar flow so that solvents are injected without turbulence or mixing. A non-pure solution of enantiomers (305) and (306) can be injected near the center bottom of the channel (301). The effect of shear flow conditions causes the chiral molecules to rotate leading to propulsion of counterpart enantiomers due to molecular propeller effect into opposite directions (307) and (308) along the direction perpendicular to the flow and to the shear plane. If channel heights are chosen to be different on the left and right sides of the channel, then enantiomers are not only separated in the direction perpendicular to the flow but also separated along the direction of the flow because flow velocity is different on the left and right sides of the channel. For the geometry shown in the Figure 3, the enantiomer (306) will move faster along the channel than enantiomer (305) because flow will be faster on the right side of the channel. To prevent molecules from diffusing away from the bottom of the channel where the shear rate is the highest, two different, immiscible fluids can be used. The solvent (302) injected near bottom contains dissolved chiral molecules while the solvent (303) injected above the bottom has low solubility with respect to the chiral molecules of interest thereby preventing the diffusion of the chiral molecules away from the bottom of the channel.

In one embodiment the channel (301) is split using Y-junction which divides the flow of the left and the right sides of the channel and sends it into two different collections ports, 310 and 309, respectively, thereby enabling separation and collections of S and R enantiomers. When Y-junction is used a rectangular channel can be used since separation of enantiomers only in the direction perpendicular to the channel is required. Using Y-junction is a preferred embodiment as a shorter channel is required to achieve separation as compared to trapezoidal channel which enables separation along the direction parallel to the flow but is expected to require significantly longer channel.

In another embodiment, the disclosure provides a device for separating counterpart enantiomers from a mixture of a solution of enantiomers, the device including a) a fluidic channel having a proximal portion and a distal portion; b) an injection port near the proximal portion of the channel for injecting the solution of enantiomers; c) one or more injections ports near the proximal portion of the channel for injecting solvents at different heights of the channel; d) a pump to drive a flow in the channel; and e) two or more ports on the distal side of the channel for collecting the separated enantiomers.

In one aspect, the disclosure provides a device for separating counterpart enantiomers from a mixture of a solution of enantiomers, wherein the channel has trapezoidal form and a height of the channel on one side is different than a height of the channel on the other side.

In another aspect, the disclosure provides a device for separating counterpart enantiomers from a mixture of a solution of enantiomers, wherein two or more different solvents are used to confine the solution of enantiomers near the proximal portion of the channel.

In another aspect, the disclosure provides a device for separating counterpart enantiomers from a mixture of a solution of enantiomers, wherein one of the two or more different solvents dissolves enantiomers and the other of the two or more different solvents does not.

In another aspect, the disclosure provides a device for separating counterpart enantiomers from a mixture of a solution of enantiomers, wherein one of the two or more different solvents has larger viscosity than the other of the two or more different solvents in order to increase shear rate and/or to decrease diffusion.

In another aspect, the disclosure provides a device for separating counterpart enantiomers from a mixture of a solution of enantiomers, wherein an aspect ratio of a width to a height of the channel is less than about 1, or from about 1 to about 5, or from about 5 to about 10, or from about 10 to about 50, or from about 50 to about 100, or from about 100 to about 1000, or more than 1000.

In another aspect, the disclosure provides a device for separating counterpart enantiomers from a mixture of a solution of enantiomers, wherein the height of the channel is less than about 10 nm, or from about 10 nm to about 100 nm, or from about 100 nm to about 500 nm, or from about 500 nm to about $\mu$m, or from about 1 $\mu$m to about 2 $\mu$m, or from about 2 $\mu$m to about 10 $\mu$m, or from about 10 $\mu$m to about 50 $\mu$m, or from about 50 $\mu$m to about 100 $\mu$m, or from about 100 $\mu$m to about 500 $\mu$m, or from about 500 $\mu$m to about 1mm, or from about 1 mm to about 5 mm, or from about 5 mm to about 10 mm, or more than 10 mm.

In another aspect, the disclosure provides a device for separating counterpart enantiomers from a mixture of a solution of enantiomers, wherein shear rate is less than 10 s$^{-1}$, or from about 10 s$^{-1}$ to about 100 s$^{-1}$, or from about 100 s$^{-1}$ to about 1000 s$^{-1}$, or from about 1000 s$^{-1}$ to about 10000 s$^{-1}$, or from about 10000 s$^{-1}$ to about 100000 s$^{-1}$, or from about 100000 s$^{-1}$ to about 1000000 s$^{-1}$, or from about 10$^6$ s$^{-1}$ to about 10$^7$ s$^{-1}$, or more than 10$^7$ s$^{-1}$.

The method can further comprise performing a theoretical simulation to determine the direction of motion of an enantiomer in the specific absolute configuration. In the theoretical analysis method, a molecular dynamics simulation is performed on the molecular model of the enantiomer with given absolute configuration in an explicit solvent to produce molecular dynamics trajectory. The trajectory is analyzed to determine correlations between the random rotational and translation motions of the enantiomer to determine (a) a preferred axis of rotation; (b) the axis with maximal rotational translation coupling; and (c) the average rotational-translational coupling for the enantiomer and the expected direction of propulsion for the given absolute configuration of the enantiomer.

The disclosure further describes a method to determine an absolute configuration of the enantiomer. The method includes (a) performing theoretical simulation to determine direction of motion of an enantiomer in the specific absolute configuration; (b) using described device on the solution of a pure or enriched enantiomer with unknown absolute configuration to determine its direction of motion; and (c) using comparison between the theoretical and experimental directions to determine the absolute configuration of the enantiomer.

Thus, in another embodiment, the disclosure provides an analysis method to determine the direction of motion of an enantiomer having specific absolute configuration, the method including a) performing molecular dynamics simulations on the enantiomer in explicit solvent to obtain molecular dynamics trajectory; and b) using on molecular dynamics trajectory to correlate rotational and translational motions of the enantiomer to determine direction of propulsion due to molecular propeller effect.

In one aspect, the disclosure provides an analysis method to determine the direction of motion of an enantiomer having specific absolute configuration, wherein propulsion direction is determined by using hydrodynamic calculation of rotational to translation coupling.

In another aspect, the disclosure provides an analysis method to determine the direction of motion of an enantiomer having specific absolute configuration, wherein the size of the chiral molecule is less than about 0.5 nm, or from about 0.5 nm to about 1 nm, or from about 1nm to about 2 nm, or from about 2 nm to about 3 nm, or from about 3 nm to about 5 nm, or from about 5 nm to about 10 nm, or from about 10 nm to about 100 nm, or more than 100 nm.

In another aspect, the disclosure provides an analysis method to determine the direction of motion of an enantiomer having specific absolute configuration, wherein the chiral molecule is any microscopic or macroscopic chiral object.

Contained within the devices, depending on the overall configuration, are necessary power sources, electronic circuitry and sensors configured to maintain specified rotation frequency or pressure, temperature and monitor separation efficiency. In certain instances, one or more functions, *e.g.,* data analysis circuitry, power, data display light sources and sensors, and other components and devices, may be located in a separate portion of the device connected to the device portion by means of electrical wires or fiber optics.

The described method and device can be used for the purification/isolation of majority of chiral molecules both currently known as well as those yet to be discovered.

The described method and device separates racemic mixtures of biologically active substances into their purified enantiomeric constituents which may have distinct biological and/or toxicological attributes ("an active agent").

When the active agent is a compound, then salts, solvates (including hydrates) of the free compound or salt, crystalline forms, non-crystalline forms, and any polymorphs of the compound are included. All forms are contemplated herein regardless of the methods used to obtain them.

The described method/apparatus can be used in the purification of chiral chemical intermediates in addition to the purification of chiral biologically active substances.

Non-limiting examples of chiral molecules that can be purified into their enantiopure form by a process employing the described method and device are listed in Tables I and II.

**Table I**

| Racemic | Generic Name | Racemate CAS |
|---|---|---|
| Coumadin | Warfarin | 81-81-2 |
| Wellbutrin XL | Bupropion | 34841-39-9 |
| Zofran | Ondansetron | 99614-02-5 |
| Aricept | Donepezil | 120014-06-4 |
| Allegra | Fexofenadine | 83799-24-0 |
| Prilosec | Omeprazole | 73590-58-6 |
| Norvasc | Amlodipine | 88150-42-9 |
| Adderall XR | Amphetamine | 300-62-9 |
| Prevacid | Lansoprazole | 103577-45-3 |
| Effexor XR | Venlafaxine | 93413-69-5 |
| Zyrtec | Cetirizine | 83881-51-0 |
| Aciphex | Rabeprazole | 117976-89-3 |
| Provigil | Modafinil | 68693-11-8 |
| Skelaxin | Metaxalone | 1665-48-1 |
| Concerta (Ritalin) | Carvedilol | 72956-09-3 |

**Table II**

| Pure Enantiomers | Generic Name | Enantiomer CAS |
|---|---|---|
| Cymbalta | Duloxetine | 136434-34-9 |
| Plavix | Clopidogrel | 113665-84-2 |
| Lipitor | Atorvastatin | 134523-00-5 |
| Nexium | Esomeprazole | 161796-78-7 |
| Lunesta | Eszopiclone | 138729-47-2 |
| Singulair | Montelukast | 158966-92-8 |
| Levaquin | Levofloxacin | 100986-85-4 |
| Zocor | Simvastatin | 79902-63-9 |
| Lexapro | Escitalopram | 128196-01-0 |
| Zoloft | Sertraline | 79617-96-2 |
| Topamax | Topiramate | 97240-79-4 |

(continued)

| Pure Enantiomers | Generic Name | Enantiomer CAS |
|---|---|---|
| Sustiva | Efavirenz | 154598-52-4 |
| Nasonex | Mometasone | 105102-22-5 |
| Zetia | Ezetimibe | 163222-33-1 |
| Paxil | Paroxetine | 61869-08-7 |
| Crestor | Rosuvastatin | 287714-41-4 |
| Diovan | Valsartan | 137862-53-4 |
| Lyrica | Pregabalin | 148553-50-8 |
| Flomax | Tamsulosin | 106133-20-4 |
| Omnicef | Cefdinir | 91832-40-5 |
| Altace | Ramipril | 87333-19-5 |
| Oxycontin | Oxycodone | 76-42-6 |
| Nasacort | Triamcinolone | 124-94-7 |
| Cialis | Tadalafil | 171596-29-5 |
| Detrol | Tolterodine | 124937-51-5 |
| Avelox | Moxifloxacin | 354812-41-2 |
| Synthroid | Levothyroxine | 51-48-9 |
| Strattera | Atomoxetine | 83015-26-3 |
| Pravachol | Pravastatin | 81093-37-0 |
| Pulmicort | Budesonide | 51333-22-3 |
| Yasmin | Drospirenone | 67392-87-4 |
| Zyvox | Linezolid | 165800-03-3 |
| Flovent | Fluticasone | 80474-14-2 |
| Norvir | Ritonavir | 155213-67-5 |
| Viread | Tenofovir | 147127-20-6 |
| Dexamethasone | Dexamethasone | 50-02-2 |
| Relpax | Eletriptan | 143322-58-1 |
| Lumigan | Bimatoprost | 155206-00-1 |
| Zithromax | Azithromycin | 83905-01-5 |
| Mirapex | Pramipexole | 104632-26-0 |
| Avodart | Dutasteride | 164656-23-9 |
| Casodex | Bicalutamide | 90357-06-5 |
| Vigamox | Moxifloxacin | 354812-41-2 |
| Tussionex | Hydrocodone | 125-29-1 |
| Sensipar | Cinacalcet | 226256-56-0 |
| Inderal | Propranolol | 525-66-6 |
| Codeine | Codeine | 76-57-3 |
| Biaxin | Clarithromycin | 81103-11-9 |
| Nebcin | Tobramycin | 32986-56-4 |
| Taxol | Paclitaxel | 33069-62-4 |

Chiral molecule examples contained herein are meant to be offered merely by way of illustration but are not meant to limit the scope of the invention both in terms of currently known as well as currently unknown chiral molecules which can be purified into enantiopure form by the process employing the described method and apparatus.

**EXAMPLES**

The application may be better understood by reference to the following non-limiting examples, which are provided as exemplary embodiments of the application. The following examples are presented in order to more fully illustrate embodiments and should in no way be construed, however, as limiting the broad scope of the application.

The methods and devices disclosed herein may be employed for a variety of uses and applications. Such applications include but are not limited to:

**Example 1: Separation of enantiomers from racemic mixture**

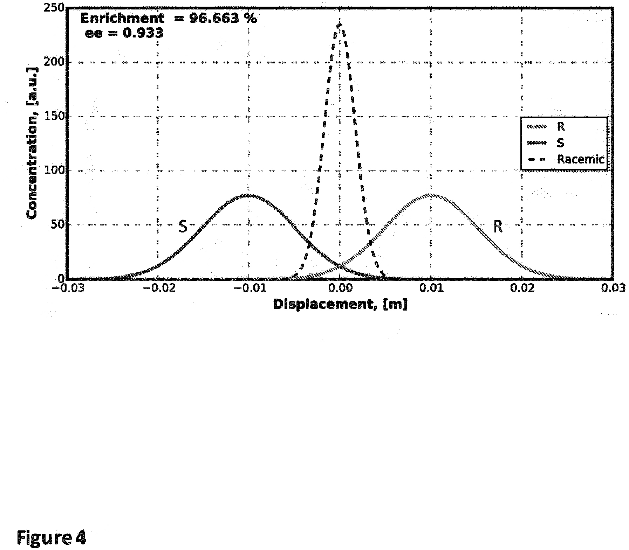

In this example, a device as disclosed herein may be employed to separate enantiomers from a racemic mixture. Figure 4 illustrates a prophetic example of the separation of the enantiomers after 4 hours of operation from the racemic mixture initially located at the center of the displacement axis. In this example the chiral molecules are exposed to shear flow with the shear rate value of $1.04 \times 10^6$ s$^{-1}$. Such shear rate can be easily achieved between two rotating cylindrical members as shown in Figure 2 with the radius of 2 cm, the gap between the cylinders of 20 $\mu$m and the rotation frequency of 10000 rpm. The molecular propulsion velocity is 0.62 $\mu$m/s assuming that the molecular propeller efficiency, $L_r$, of the test molecule is 0.1 Å per one revolution of the molecule. Figure 1 shows that after four hours the enantiomeric enrichment level of 96.6 % is achieved if the sample is split in the middle. In some embodiments it is advantageous to use higher viscosity solvent to reduce the diffusive spreading of the molecules. Increasing viscosity of the solvent also increases the Peclet number; the higher the Pe number is, the more efficient is the rotation of the molecule at the given shear rate magnitude.

**Example 2: Separation of enantiomers from racemic mixture**

In this example, a device as disclosed herein may be employed to separate enantiomers from a racemic mixture. In order to separate enantiomers of a chiral molecule, a racemic mixture of chiral molecules is dissolved in a suitable solvent and injected into separation device shown in Fig. 2 using either port 208 or 209. During the injection the upper member 202 is elevated so that solution can fill equally the space corresponding to the inner and the outer gaps (205 and 211, respectively). Then the device is activated leading to rotation of the inner and outer cylinders at, for example, 10,000 RPM. After specified amount of time (for example 1 hour) needed to achieve separation, the rotation is stopped and the inner member 202 is lowered until it is in the contact with the bottom of the lower member 201, thereby effectively sealing the inner and the outer gaps from each other. Depending on the molecular structure of the molecule the S (or R) enantiomer and R (or R) enantiomer will be separated (or enriched to a required degree) into the chambers corresponding to the outer and inner gaps, respectively. The separated counterpart enantiomers S and R, are then collected by draining the solution from the chambers corresponding to the outer (205) and inner (211) gaps using ports 208 and 209.

**Example 3: Determination of absolute configuration**

In this example, a device as disclosed herein may be employed by a chemist to determine absolute configuration of the enantiomer purified using other means e.g. chiral HPLC. In order to determine absolute configuration of an enantiomer of a chiral molecule, the pure enantiomer (or a mixture enriched in one enantiomer) is dissolved in a suitable solvent and injected into separation device shown in Fig. 2 using either port 208 or 209. During the injection the upper member 202 is elevated so that solution can fill equally the space corresponding to the inner and the outer gaps (205 and 211, respectively). Then the device is activated leading to rotation of the inner and outer cylinders at, for example, 10,000 RPM. After specified amount of time (for example 1 hour) needed to achieve separation, the rotation is stopped and the inner member 202 is lowered until it is in the contact with the bottom of the lower member 201, thereby effectively sealing the inner and the outer gaps from each other. Depending on the molecular structure of the molecule the S or R enantiomer will be enriched in one of the chambers (e.g. the inner chamber 211) and depleted in other chamber (e.g. the outer chamber 205) corresponding to the outer and inner gaps, respectively. The solutions from the outer and inner chambers are then collected using ports 205 and 211. By comparing the concentration of the molecules in the solution samples from the inner and outer chamber (as for example measured using absorption or fluorescence) the direction of molecular motion due to molecular propeller effect is determined. The experimentally determined direction of motion is then compared to the direction of motion of each enantiomer obtained from theoretical simulations described above, to determine the absolute configuration of the enantiomer.

**Example 4: Separation of enantiomers from racemic mixture in a flow channel**

In this example, a device as disclosed herein may be employed to separate enantiomers from a racemic mixture. In order to separate enantiomers of a chiral molecule, a racemic mixture of chiral molecules is dissolved in a suitable solvent (selected as described above) and injected into separation device shown in Fig. 3 near the bottom of the channel. Suitable pumps/or pressure are used to drive the flow through the channel. The S and R enantiomers separate and are collected after splitting the flow approximately in the middle by splitting the flow on the left and right side of channel into separate channels (310 and 309) which then are routed into collection vessels. If only solution of one enantiomer is injected, then the absolution configuration determination can be performed similarly as described above in Example 2 by comparing concentrations of the molecules in the samples collected from the left and the right sides of the separation channel.

**Claims**

1.  A device for separating counterpart enantiomer molecules from a mixture of a solution of chiral molecules, the device comprising:

    a) a rotatable inner member containing two or more surfaces;
    b) a rotatable outer member containing two or more surfaces; and
    c) two or more contiguous, annular channels between the surfaces of the inner member and the outer member containing the solution of enantiomers,

    wherein the inner member can be lowered to separate and seal the mixture of the solution of chiral molecules in the contiguous channel into an inner chamber and an outer chamber for collecting the separated enantiomers.

2.  The device according to claim 1, wherein a solution of a pure or enriched enantiomer is placed in the device and a relative enrichment of the enantiomer in the inner chamber or the outer chamber is used to determine the direction of motion and, in conjunction with theoretical molecular analysis, the absolute configuration of the enantiomer.

3.  The device according to claim 1, wherein a rotation frequency of the inner and outer members is between about 1-5000 rpm, or between about 5000-10000 rpm, or between about 10000-20000 rpm, or between about 20000-50000 rpm, or between about 50000-10000 rpm, or more than 100000 rpm.

4.  A device according to claim 1, wherein the gap between the surfaces of the inner member and the outer member are in the range: less than 0.1 $\mu$m, 0.1 $\mu$m - 1 $\mu$m, 1 $\mu$m - 10 $\mu$m, 10 $\mu$m - 1 mm, 1 mm - 10 mm, more than 10 mm.

5.  A device for separating counterpart enantiomers from a mixture of a solution of enantiomers, the device comprising:

    a) a fluidic channel having a proximal portion and a distal portion;
    b) an injection port near the proximal portion of the channel for injecting the solution of enantiomers;
    c) one or more injections ports near the proximal portion of the channel for injecting solvents at different heights of the channel;
    d) a pump to drive a flow in the channel; and
    e) two or more ports on the distal side of the channel for collecting the separated enantiomers.

6.  A device according to claim 5, wherein the channel has trapezoidal form and a height of the channel on one side is different than a height of the channel on the other side.

7.  The device according to claim 5, wherein two or more different solvents are used to confine the solution of enantiomers near the lower portion of the channel.

8.  The device according to claim 7, wherein one of the two or more different solvents dissolves enantiomers and the other of the two or more different solvents does not.

9.  The device according to claim 7, wherein one of the two or more different solvents has larger viscosity than the other of the two or more different solvents in order to increase shear rate and/or to decrease diffusion.

10. The device according to claim 6, wherein an aspect ratio of a width to a height of the channel is less than about 1, or from about 1 to about 5, or from about 5 to about 10, or from about 10 to about 50, or from about 50 to about 100, or from about 100 to about 1000, or more than 1000.

11. A method for separating and analyzing counterpart enantiomer molecules from a mixture of a solution of chiral molecules, the method comprising:

    a) inducing fluid shear flow conditions in the solution of enantiomers;
    b) rotating each of the enantiomers independently due to the shear flow, wherein each counterpart enantiomer rotates in the same direction around some random molecular axis;

c) propulsion of each of the enantiomers independently due to a molecular propeller effect along a direction perpendicular to a plane of shear flow, wherein each counterpart enantiomer molecule moves in opposite direction; and

d) waiting for an amount of time until a specified degree of enantiomer separation is achieved.

12. The method according to claim 11, wherein the shear flow is induced by pressure-induced flow of the solution of enantiomers through a channel containing multiple surfaces.

13. The method according to claim 11, wherein the shear flow is induced by relative motion of multiple surfaces in contact with the solution of enantiomers.

14. The method according to claim 11, wherein the direction of motion of the enantiomer is dependent on the absolute configuration of the enantiomer and is used, in conjunction with theoretical molecular analysis, to determine its absolute configuration.

15. A theoretical molecular analysis method to determine the absolute configuration of a enantiomer molecule, comprising:

a) performing molecular dynamics simulations on one or more of counterpart enantiomers in explicit solvent to obtain molecular dynamics trajectories,

b) using the molecular dynamics trajectory to correlate rotational and translational motions of counterpart enantiomers to determine directions of propulsion due to molecular propeller effect in fluid shear flow,

c) comparing experimentally measured direction of the propulsion of the enantiomer molecule in fluid shear flow to theoretically determined directions of each counterpart enantiomer to determine the absolute configuration of the enantiomer.

Figure 1 A

Figure 1B

Figure 2A

Figure 2B

**Figure 3**

**Figure 4**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/003909 A2 (CHACHISVILIS MIRIANAS [US]) 5 January 2017 (2017-01-05)<br>* abstract; claims 1,2,5-15,17,18; figures *<br>* the whole document *<br>----- | 1-15 | INV.<br>B01D3/12<br>B01D17/02 |

| TECHNICAL FIELDS SEARCHED (IPC) |
|---|
| B01D |

The present search report has been drawn up for all claims

| Place of search | Date of completion of the search | Examiner |
|---|---|---|
| The Hague | 2 April 2019 | Lapeyrère, Jean |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 21 1221

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2019

| Patent document cited in search report | Publication date | Patent family member(s) | Publication date |
|---|---|---|---|
| WO 2017003909 A2 | 05-01-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7935906 B, Kibar
- US 8698031 B